# EUROPEAN PATENT APPLICATION

(11) **EP 1 261 192 A1**
(43) Date of publication of application: **27.11.2002**
(21) Application number: 01111683.7
(22) Date of filing: 14.05.2001
(51) Int. Cl.: H04M 17/00

(54) **Payment method for telephone calls on a prepaid and credit limit basis**

(71) Applicant: FASTBEAT. COM. LIMITED, GUILFORD, SURREY GU2 5RG (GB)
(72) Inventor: Gonen, Gad, Herzeliya 46301 (IL); Suess, Moti, Herzeliya 46301 (IL)
(74) Representative: Becker Kurig Straus

(57) **Abstract**

The invention discloses a method for payment of at least a portion of a cost of a telephone call to or from a telephone 105. This method comprises the steps of determining whether a balance of a hybrid account is greater than zero, balance being the sum of a prepaid amount of the account and a credit line; and if the balance is greater than zero, debiting the hybrid account for the cost of the at least a portion of the telephone call.

## Description

### FIELD OF THE INVENTION

The present invention relates to payment methods for telephone calls involving, for example, transmission of voice, data or video and using circuit switched technologies for example, wireline, wireless or packet switched technologies, for example Voice over IP (VoIP).

### BACKGROUND OF THE INVENTION

Users of telephones, whether wired, mobile or VoIP, have an account provided by the telephone service provider. The account allows the user to make and receive telephone calls. The user is periodically billed for outgoing calls and, in the case of a mobile phone, sometimes for incoming calls as well. Most telephone users do not keep track of their use of the telephone, and accordingly receive telephone bills, sometimes much larger than expected.

In order to assist a user in keeping track of his use of his telephone and for other purposes, prepaid telephone accounts have been devised in which a user pays a sum of money into an account established with the network or a service provider such as a mobile virtual network operator (MVNO). As calls are subsequently made or received by the telephone, the cost of the calls are deducted from the balance of the prepaid account. When the account balance is low, the user pays again into his account. If the user, however, fails to pay in to his account, his service could be cut off in the middle of a telephone call.

### SUMMARY OF THE INVENTION

The present invention provides a system and method for billing telephone use. In accordance with the invention, an account, referred to herein as a "*hybrid account*", is established for the user, which serves for prepay and for billing. The user pays into the hybrid account. The user is also provided with a line of credit, which together with the recharged amount establishes the amount available for consumption. The available amount ("balance") is updated as phone calls are made. The credit line is normally determined by the system, but the user may apply to have his credit line increased or decreased. Any credit used by the user is periodically billed, for example at the end of every month. user may pay for any used credit in part or in full before being billed.

The system of the invention includes a Hybrid Account Management Unit (HAMU) that maintains a plurality of hybrid accounts relating to payment for phone calls made or received by users. The HAMU includes a Credit Management Unit (CMU) that allows the user, for example, to establish an account with the system and to request a new credit line. The CMU also manages the database tables that hold the user hybrid account details. The HAMU also includes a Recharging Unit (RU) that updates a dual ported real time database (DPDB) with amounts paid by the user into the account and with the credit line as negotiated with the user. The balance as stored in the DPDB may be positive or zero. In accordance with the invention, the balance is zero when all prepaid amount and the credit line are used up. The balance is equal to the credit line when all prepaid is used up, or when a new account is opened and no payments have yet been done. A user is allowed to make phone calls as long as his balance is positive. The Rating Engine (RE) is a device which normally exists in prepaid systems having the function of conversion of currency to Call Duration time Units (CDU). In the hybrid system, the RE may also consider in it's calculations, different rates for paid in advanced money and money credited to the user for future billing and payment. The RE shares with the RU access to the DPDB.

Thus, in its first aspect, the invention provides a method for payment of at least a portion of a cost of a telephone call to or from a telephone, the method being characterized in comprising the steps of:
(i) determining whether a balance of a hybrid account is greater than zero, balance being the sum of a prepaid amount of the account and a credit line; and
(ii) if the balance is greater than zero, debiting the hybrid account for the cost of the at least a portion of the telephone call.

In its second aspect, the invention provides a system for effecting payment of at least a portion of a cost of a telephone call. to or from a telephone, the system being characterized in comprising a Hybrid Account Management Unit configured to carry out the steps of:
(i) determining whether a balance of a hybrid account is greater than zero, the balance being the sum of a prepaid amount of the account and a credit line; and
(ii) if the balance is greater than zero, debiting the hybrid account for the cost of the at least a portion of the telephone call.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** shows a system for payment of telephone calls in secordance with one embodiment of the invention;
**Fig. 2** shows an exemplary architecture of the HAMU of the system of Fig. 1;
**Fig. 3** shows a flow chart diagram for establishing a hybrid account with the system of Fig. 1; and
**Fig. 4** shows a flow chart diagram for monitoring telephone calls.

### DETAILED DESCRIPTION OF THE INVENTION

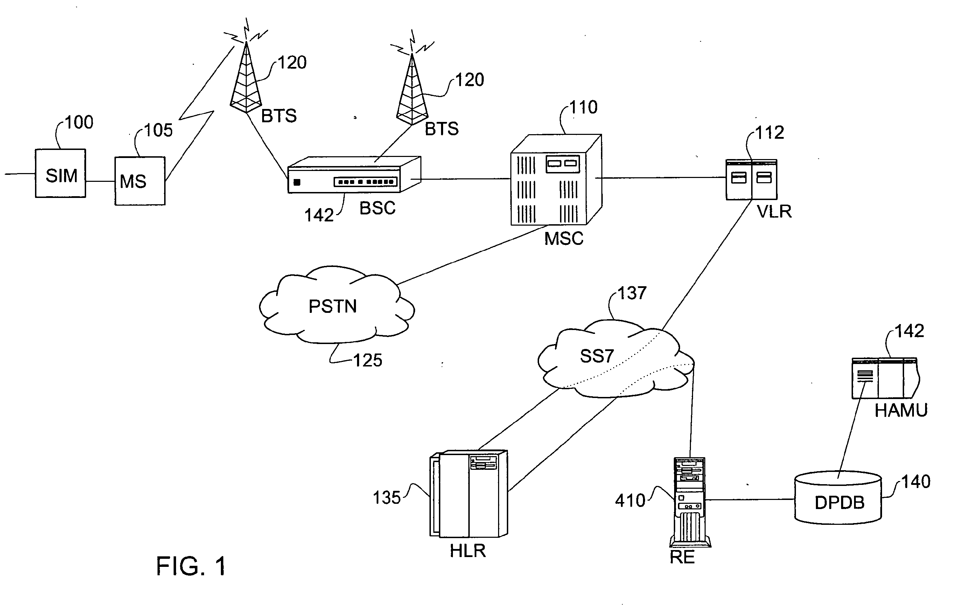

Fig. 1 shows a wireless telephone system in which a user **100** makes and receives telephone calls with a mobile phone **105** (also known as a cellular phone). The phone **105** communicates with a mobile switching center (MSC) **110** via a base station controller **115** and a transceiver **120.** The MSC **110** is one of a plurality of switching centers within a network of mobile telephones. A visiting location register (VLR) **112** associated with the MSC **110** maintains account profile of each mobile phone using the MSC **110** at any time. The MSC **110** communicates with other telephones (not shown) via a public switched telephone network (PTSN) indicated by a cloud **125** that is supported by a signaling system 7 network (SS7) indicated by the cloud **137**. A home location register **135** maintains all mobile telephones it the network and communicates with the VLR **112** and with a rating engine **410** over the SS7 network **137.** The above described telephone system architecture is typical of the GSM system. This is by way of example only, and other telephone system architectures are contemplated within the scope of the invention

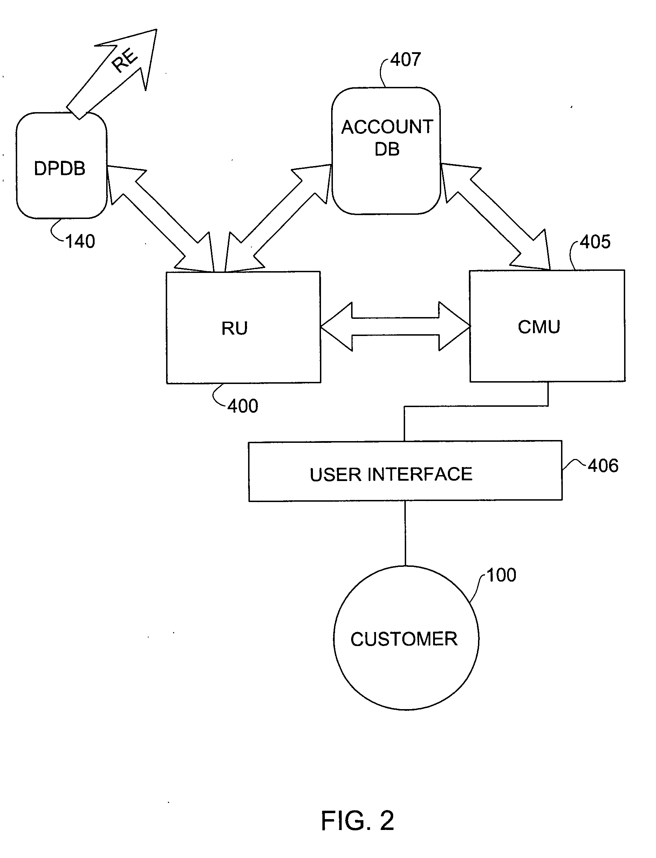

A database (DPDB) **140** is shared by the rating engine **410** and an HAMU **142** The HAMU **142** maintains a plurality of balances and credit lines relating to phones of users, including the user **100.** Fig. 2 shows an exemplary architecture of the HAMU **142.** ACMU **405** allows the user, for example, to establish an account with. the system, to request a new credit line, to recharge his prepaid account or to pay for used credit. The recharging unit **400** loads data input by the user **100** onto the DPDB **140**. The CMU **405** also stores to account database **407**, data relating to the various hybrid accounts including the payment method and personal identity information.

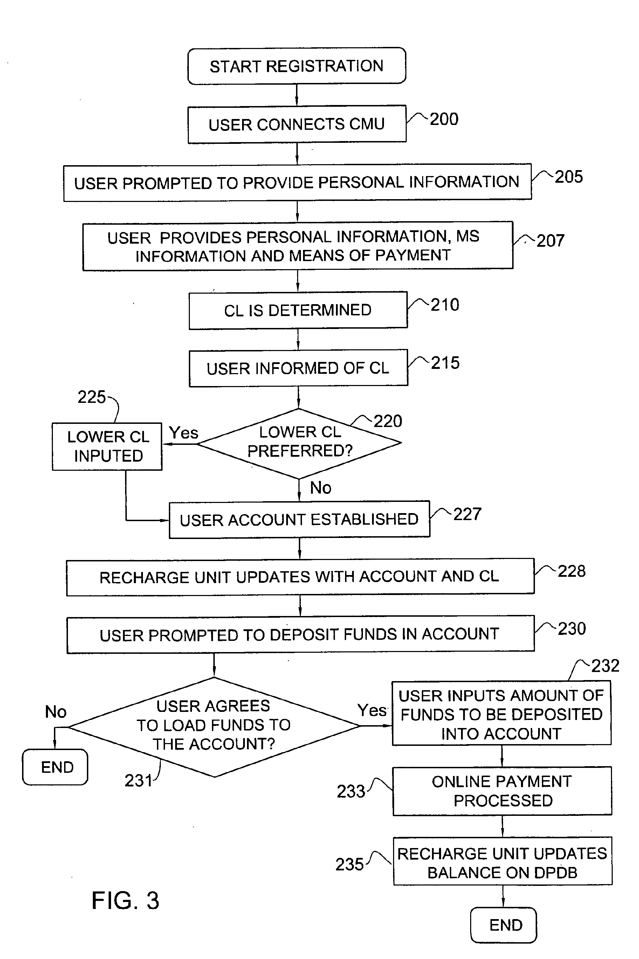

Fig. 3 shows a flow chart diagram for establishing account with the HAMU **142** for payment of telephone calls. In step **200**, the user **100** contacts the CMU 405. The user may contact the CMU **405** over the PSTN **125.** In this case, the user **100** inputs data to the CMU **405** using interactive voice response (IVR) by depressing keys on the telephone **105.** Alternatively, the user **100** may contact the CMU **405** over the Internet or by short message service (SMS) (not shown).

In step **205,** the user is prompted by the CMU **405** to provide personal information relating to himself and to the telephone **105** to which the account relates. In step 207, the user provides the requested information. In step **210,** the CMU **400** determines a credit line for the user **100.** The CMU **405** may authorize a finite or infinite credit line. In step **215** the user is informed of the credit line that the CMU **405** has determined. In step **220,** the user is asked if he prefers a lower credit line than the credit line that was determined by the CMU **405.** If the user responds in the affirmative, then the user is instructed to input the desired credit line (step **225**). Once the final credit line has been established, the user can choose to exit and immediately benefit from the credit by making calls. As he can also charge his phone account and use prepaid money, he is prompted to make a deposit to the prepaid account (step **230**). If he chooses to prepay (step 231) then in step **232,** the deposit is made. The deposit is most conveniently made by the user providing a credit card number and specifying an amount to be deposited. After the transaction is completed when the credit card clearing house approves the transfer of funds (step **233**) the recharging unit **400** updates the balance of the DPDB.

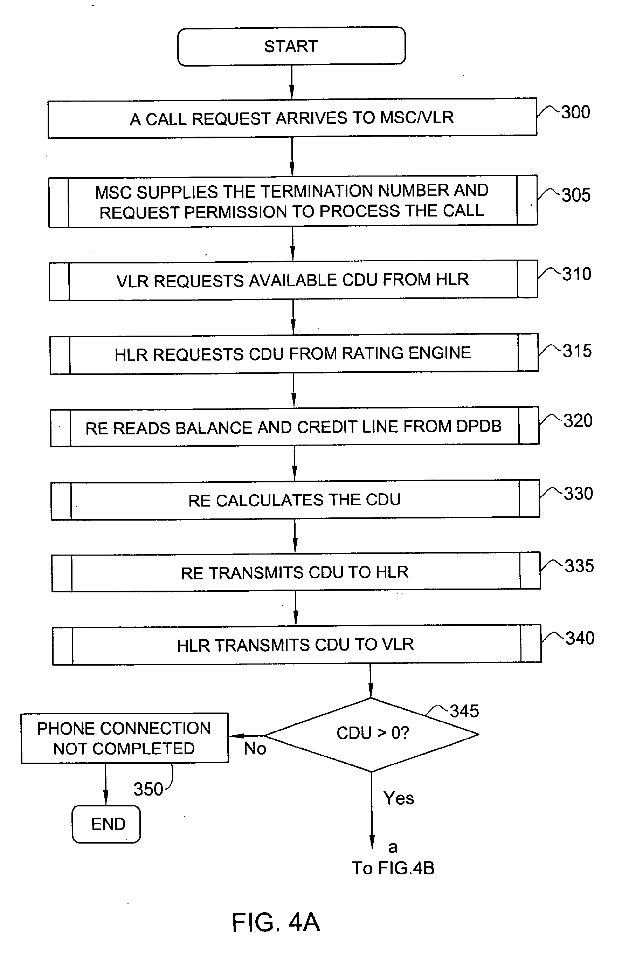

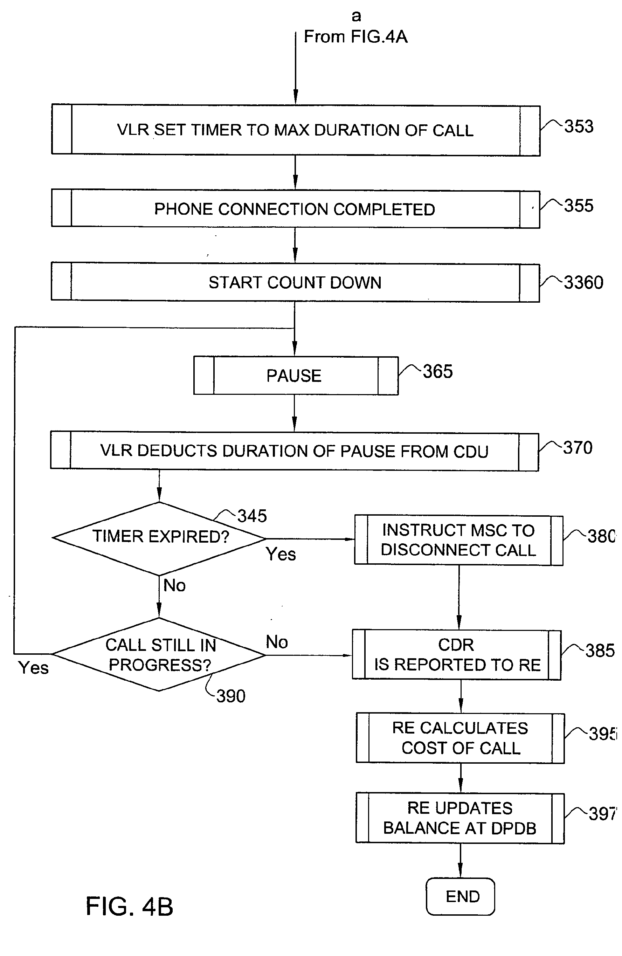

Fig. 4 shows a process for monitoring telephone calls from or to the telephone **105**. The process is carried out during a telephone call between the user **100** and another user (not shown). In step **300,** a call request arrives from the originating telephone **105** to the MSC. In step **305,** the MSC in forms the VLR **112** of the call request including the destination telephone number. step **310** the VLR **112** requests from the HLR the number of Call Duration time Units (CDU) available to the caller. In step **315**, the HLR **135** contacts the rating engine **410** and asks for the number of airtime units available to the caller considering the specific destination number. In step **320** the RE checks the balance and the CL with the DPDB **140.** In step **330,** the rating engine **410** calculates from the balance the number of CDU available to the caller. The calculation is based on time of day rating, the specified destination of call, possible different rating for prepaid money and for credited money. In step **335,** the number of available CDU is transmitted to the HLR **135**. In step **340** the HLR **135** transmits the number of available CDU to the VLR **112**.

In step **345** the VLR **112** determines whether the number of CDU is greater than 0. (If the Credit Line is infinite, than the number of CDU is always greater than 0 irrespective of the number of CDU that have been used). If in step **345** it is determined that the number of CDU is not greater than 0, a phone connection is not completed (step **350**) and the process terminates. If yes, then in step **353** the VLR **112** sets a timer to the maximum allowed call duration, and step **355** the VLR **112** instructs me MSC **110** to complete a phone connection between the caller and the destination telephone. In step **360,** the timer begins to time the duration of the phone connection. In step **365** the system pauses, for example for 10 seconds. In step **370** the VLR **112** deducts the duration of the pause from the number of available airtime. In step **375** it is determined whether the amount of remaining airtime is greater than 0. If no, then in step **380** the VLR **112** instructs the MSC **110** to disconnect the call, and the process proceeds to step **385.** If yes, then in step **390** the VLR **112** determines whether the call is still in progress. If yes, the process returns to step **365.** If no, the process proceeds to step **385**.

In step **385,** a CDR is prepared and reported back to the rating engine. In step **395,** the rating engine (acting as a billing system) calculates the cost of the phone call. In step **397,** the rating engine decrements the balance with the cost of the call, and thc process terminates.

The user is periodically billed. For example, the CMU **405** may check the balance of the account once in a month. If the balance shows a use of credit, the user is billed for the difference between the credit line and the balance. After payment, the account is recharged to show an amount equal to the credit line.

## Claims

1. A method for payment of at least a portion of a cost of a telephone call to or from a telephone (**105**), the method being **characterized in** comprising the steps of:
**(i)** determining whether a balance of a hybrid account is greater than zero, balance being the sum of a prepaid amount of the account and a credit line; and
**(ii)** if the balance is greater than zero, debiting the hybrid account for the cost of the at least a portion of the telephone call.

2. The method of Claim 1 wherein the telephone **105** is a mobile telephone.

3. The method according to any one of the previous claims further comprising a step of billing the individual when the balance is less than the credit line for an amount equal to the difference between the credit line and the balance.

4. The method according to Claim 3 wherein the step of billing the individual occurs once in a predetermined time period.

5. The method according to any one of the previous claims further comprising a step of depositing funds into the hybrid account.

6. The method according to any one of the previous claims wherein the Credit Line in infinite.

7. A system for effecting payment of at least a portion of a cost of a telephone call to or from a telephone (**105**), the system being **characterized in** comprising a Hybrid Account Management Unit (**142**) configured to carry out the steps of:
**(i)** determining whether a balance of a hybrid account is greater than zero, the balance being the sum of a prepaid amount of the account and a credit line; and
**(ii)** if the balance is greater than zero, debiting the hybrid account for the cost of the at least a portion of the telephone call.

8. The system of Claim 7 wherein the telephone (**105**) is a mobile phone.

9. The system of Claim 7 or 8 wherein the Hybrid Account Management Unit (**140**) is further configured to:
(i) determine whether the balance is less than the credit line; and
(ii) if the balance is less than the credit line, bill the user for an amount equal to the difference between the credit line and the balance.

10. The system. of Claim 9 wherein billing of the individual occurs once in a predetermined time period.

11. The system according to any one of claims 7 to 10 wherein the Credit Line is infinite.
